# EUROPÄISCHE PATENTSCHRIFT

(11) **EP 1 820 708 B1**
(45) Veröffentlichungstag und Bekanntmachung des Hinweises auf die Patenterteilung: **12.08.2009**
(21) Anmeldenummer: 07102574.6
(22) Anmeldetag: 16.02.2007
(51) Int. Cl.: B60T 7/20, B60T 11/34, B60T 11/10

(54) **Hydraulische Anordnung**
Hydraulic assembly
Agencement hydraulique

(30) Priorität: 18.02.2006 DE 102006007575
(43) Veröffentlichungstag der Anmeldung: 22.08.2007
(73) Patentinhaber: Deere & Company, Moline, IL 61265-8098 (US)
(72) Erfinder: Bitter, Marcus, 68199, Mannheim (DE); Remmelmann, Andreas, 63791, Karlstein (DE)
(74) Vertreter: Holst, Sönke

(56) Entgegenhaltungen:
- EP-A- 0 072 951
- EP-A- 1 538 044
- DE-A1- 2 825 847
- FR-A- 2 420 463
- FR-A- 2 496 577
- GB-A- 911 096

## Beschreibung

Die Erfindung betrifft eine hydraulische Anordnung zum Bremsen eines Anhängers, mit einer mit einer Bremsanlage eines Anhängers hydraulisch verbindbaren Bremsleitung, einer Hydraulikquelle, einem Hydrauliktank, einem die Hydraulikquelle und den Tank mit der Bremsleitung verbindenden, hydraulisch ansteuerbaren Anhängerbremsventil, einer sich zwischen der Bremsleitung und dem Anhängerbremsventil erstreckenden ersten Steuerdruckleitung, einer sich zwischen dem Anhängerbremsventil und einer Steuerdruckquelle erstreckenden zweiten Steuerdruckleitung und einem in der zweiten Steuerdruckleitung angeordneten, einstellbaren, Druck reduzierenden Mittel zur Steuerung des Steuerdrucks.

Bei Zugfahrzeugen mit einem oder mehreren Anhängern müssen besondere Vorgaben hinsichtlich der Bremsanlage des Anhängers eingehalten werden, insbesondere wenn es sich dabei um hydraulische Bremsanlagen am Anhänger handelt. Die Vorgaben und Richtlinien für hydraulische Anhängerbremsanlagen sind von Staat zu Staat verschieden, was dazu führt, dass die Bremsanlagen möglichst variabel einstellbar ausgebildet sein müssen, um den verschiedenen Anforderungen gerecht zu werden und um möglichst universell einsetzbar zu sein. Insbesondere bei der Gewährleistung eines maximalen Anhängerbremsdrucks werden unterschiedliche Standards in Europa angewandt. Dabei muss in den meisten Ländern Europas der maximale Anhängerbremsdruck bei voller Bremsung des Zugfahrzeugs zwischen 100 und 150 bar liegen. In Frankreich muss der maximale Anhängerbremsdruck bei voller Bremsung des Zugfahrzeugs sogar zwischen 120 und 150 bar liegen. Ferner darf, wenn die Bremse des Zugfahrzeuges nicht betätigt ist, am Anhänger kein Bremsdruck anstehen. Zusätzlich muss beispielsweise in Frankreich am Anhänger ein Druck von 100 bar anstehen, wenn das Zugfahrzeug mit einer Verzögerung von 25% bis 35% abgebremst wird. Es ergeben sich somit einige grundsätzliche Probleme, die im Folgenden aufgelistet werden: Ein unbeladener Anhänger wird bei gleichem Bremsdruck stärker abgebremst als ein beladener Anhänger. Es kann somit ein Über- oder Unterbremsen des Anhängers und damit ein Einknicken des gesamten Zuges stattfinden. Ein unbeladenes Zugfahrzeug wird bei gleichem Bremsdruck stärker abgebremst als ein beladenes Zugfahrzeug. Es kann somit auch hier ein Über- oder Unterbremsen des Anhängers und somit ein Einknicken des gesamten Zuges stattfinden. Bei gleichem Bremsdruck erzeugen große Reifendurchmesser eine geringere Verzögerungskraft als kleine Reifendurchmesser. Dieses gilt auch für neue und abgefahrene Reifen. Aufgrund dieser Problemstellung ist es schwierig, eine richtige Abstimmung des hydraulischen Anhängerbremsventils für einen gesamten Zug zu finden.

Im Stand der Technik sind so genannte Anpassungsventile bekannt, die den max. Bremsdruck am Anhänger begrenzen. In der Ausgabe Nr. 8, 2005, Seiten 54 und 55 der Fachzeitschrift "PROFI" wird beispielsweise eine hydraulische Anordnung zu einem Bremssystem der Firma Paul Forrer AG offenbart, bei dem über ein Lastanpassungsventil in der Bremsleitung des Anhängers ein variabler Bremsdruck für den Anhänger einstellbar ist, so dass das Bremsverhalten den unterschiedlichen Beladungszuständen des Anhängers angepasst werden kann. DE 282 5 847 beschreibt auch eine gattungsgemäße Ventilanordnung. Nachteilig wirkt sich hier aus, dass die Einstellung des Lasthalteventils außerhalb einer Kabine des Zugfahrzeugs manuell erfolgen muss. Zudem ist diese Lösung mit erheblichen Leistungsverlusten verbunden, da ein bereits erzeugter Bremsdruck in der Bremsleitung nachträglich begrenzt und der verbleibende Bremsdrucküberschuss somit vergeudet wird.

Die der Erfindung zugrunde liegende Aufgabe wird darin gesehen, eine hydraulische Anordnung der eingangs genannten Art anzugeben, durch welches die vorgenannten Probleme überwunden werden.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Erfindungsgemäß umfasst eine hydraulische Anordnung der eingangs genannten Art eine Steuerdruckquelle, die als Teil des Hydraulikkreises einer Bremsanlage eines den Anhänger ziehenden Zugfahrzeugs ausgebildet ist, wobei das den Druck reduzierende Mittel durch eine einstellbare Vorspannkraft mechanisch in eine geöffnete Grundstellung zwingbar ist. Dadurch, dass die Steuerdruckquelle als Teil des Hydraulikkreises der Bremsanlage des Zugfahrzeugs ausgebildet ist, kann durch Erzeugen eines Bremsdrucks im Zugfahrzeug, beispielsweise durch Treten des Bremspedals, ein Steuerdruck in der zweiten Steuerdruckleitung generiert werden. Gleichzeitig befindet sich das Druck reduzierende Mittel in einer geöffneten Grundstellung, so dass auch bei Ausfall einer Elektroniksteuerung am Zugfahrzeug, die Funktionalität der hydraulischen Bremsanlage für den Anhänger gewährleistet ist. Ferner erfolgt durch die Anordnung des Druck reduzierenden Mittels in der zweiten Steuerdruckleitung eine Begrenzung des Bremsdrucks für die Bremsanlage des Anhängers nicht erst in der Bremsleitung, also in einer großvolumigen Leitung, sondern bereits in der zweiten Steuerleitung für das Anhängerbremsventil, also in einer kleinvolumigen Leitung, so dass Leistungsverluste minimiert werden können.

Die Steuerdruckquelle kann beispielsweise als eine mit der Bremsanlage des Zugfahrzeugs verbundene hydraulische Leitung ausgebildet sein. Dies führt dazu, dass die zweite Steuerdruckleitung direkt von der Bremsleitung abzweigbar ist, so dass stets, wenn ein Druck in der Bremsleitung des Zugfahrzeugs aufgebaut wird, ein Steuerdruck zur Steuerung des Anhängerbremsventils ansteht. Die Steuerdruckleitung kann dabei direkt abgezweigt oder indirekt, beispielsweise über ein Verbindungsteil oder ein Ventil, mit der Bremsleitung oder einer anderen einen Bremsdruck bzw. einen Druck führenden Leitung der Bremsanlage des Zugfahrzeugs verbunden sein.

Das Druck reduzierende Mittel in der zweiten Steuerdruckleitung ist als einstellbares, hydraulisch schaltbares Druckreduzierventil ausgebildet. Dabei ist das Druckreduzierventil derart ausgebildet, dass die Vorspannkraft von einer Bedienperson einstellbar bzw. justierbar ist, sei es durch manuelle, elektrische oder hydraulische Mittel, wobei stets gewährleistet wird, dass eine voreingestellte Vorspannkraft unabhängig von hydraulischen oder elektrischen Mitteln angreift. Über eine Pilotdruckleitung, die von der zweiten Steuerdruckleitung anhängerbremsventilseitig zum Druckreduzierventil führt, kann das Druckreduzierventil in eine Schließstellung gebracht werden, vorausgesetzt, dass der in der Steuerdruckleitung herrschende Druck die voreingestellte Vorspannkraft überwindet. Sollte sich somit in der zweiten Steuerdruckleitung ein Steuerdruck einstellen, der den voreingestellten Wert übersteigt, wird das Druckreduzierventil in Schließstellung gebracht. Somit kann das Anhängerbremsventil bis zu einem voreingestellten Druck für die zweite Steuerdruckleitung entsprechend dem vom Bremssystem für das Zugfahrzeug bzw. dem von der Steuerdruckquelle generierten Druck variabel angesteuert werden.

Eine Bypassleitung, die dem Druckreduzierventil parallel geschaltet ist ermöglicht die Anordnung eines Rückschlagventils, welches in Richtung des Anhängerbremsventils geschlossen ist und durch welches ein Rückströmen von Hydraulikflüssigkeit aus der zweiten Steuerdruckleitung vereinfacht bzw. beschleunigt wird.

Das Druckreduzierventil kann als herkömmliches Druckreduzierventil, welches ab einen bestimmten Steuerdruck in der zweiten Steuerdruckleitung die zweite Steuerdruckleitung schließt, oder aber als Schaltventil ausgebildet sein, welches ab einen bestimmten Druck in der Bremsleitung die zweite Steuerdruckleitung in beide Richtungen oder zumindest in Richtung zum Anhängerbremsventil schließt. Im Falle des Schaltventils ist dieses über eine Pilotdruckleitung mit der Bremsleitung des Anhängers verbunden, so dass, bei Erreichen eines maximalen Bremsdrucks, das Schaltventil hydraulisch angesteuert schließt.

Das Druckreduzierventil weist vorzugsweise eine verstellbare Vorspannfeder aufweist, mit welcher die Vorspannkraft erzeugt wird, die das Druckreduzierventil in eine geöffnete Grundstellung zwingt. Die Vorspannfeder kann dabei von einer Bedienperson manuell oder elektrisch verstellt werden. Durch die Vorspannkraft der Verstellfeder wird rein mechanisch vorgegeben, bei welchem maximalen Druck das Druckreduzierventil schließen soll, so dass auch bei Ausfall einer das Bremssystem des Anhängers oder des Zugfahrzeugs oder Komponenten von diesen steuernden Elektronik ein den Anhänger bremsender und vom Bremssystem des Zugfahrzeugs abgezweigter Bremsdruck aufgebaut wird. Durch Verstellen der Vorspannfeder erfolgt die Einstellung eines maximalen Bremsdrucks für den Anhänger. Dadurch kann der Steuerdruck in der Steuerdruckleitung, der das Anhängerbremsventil ansteuert, auf einen bestimmten Maximaldruck eingestellt werden, der entsprechend der zuvor angesprochenen Richtlinien, beispielsweise 100 bar (120 bar in Frankreich) nicht unterschreiten und 150 bar nicht überschreiten darf.

Das Druckreduzierventil kann elektronische Verstellmittel aufweisen, die es ermöglichen, eine Stellkraft zu erzeugen, die der Vorspannkraft der Vorspannfeder entgegenwirkt oder diese verstärkt. Derartige elektronische Verstellmittel können beispielsweise als Magnetspulen ausgebildet sein, die eine Auslenkung der Vorspannfeder beeinflussen, d. h. vergrößern oder verringern. In diesen Fällen muss die Vorspannfeder so stark eingestellt sein, dass bei Ausfall einer Elektrik die eingangs genannten Vorschriften nach wie vor erfüllt werden. Somit darf der max. Anhängerbremsdruck auch hier die 100 bar (120 bar in Frankreich) nicht unterschreiten und die 150 bar nicht überschreiten. Wenn die Feder auf 100 bar (120 bar in Frankreich) eingestellt ist, kann mit zunehmendem elektrischen Steuersignal ein höherer hydraulischer Druck aufgebaut werden, um das Druckreduzierventil, welches, wie oben erwähnt, als Druckreduzierventil oder auch als Schaltventil ausgebildet sein kann, zu schalten. Die Vorspannfeder kann in diesem Fall elektronisch um bis zu 50 bar proportional verstärkt werden. Wenn die Feder auf 150 bar eingestellt ist, muss mit zunehmendem elektronischem Steuersignal ein geringerer hydraulischer Druck aufgebaut werden, um das Druckreduzierventil zu schalten. Die Vorspannfeder kann in diesem Fall elektronisch um bis zu 50 bar proportional entlastet werden. Bei einem Ausfall der Elektrik würde der Anhänger immer noch abgebremst werden können, wobei der Maximaldruck entweder 100 bar (120 bar in Frankreich) oder 150 bar betragen könnte. Auch bei Einsatz von Schaltventilen an Stelle von Druckreduzierventilen als Druckreduzierventile, können elektronische Verstellungen bzw. Ansteuerungen der Vorspannfeder angewendet werden, so dass die gleichen elektronischen Mittel verstärkend oder entlastend wirken, um bei Ausfall der Elektrik den Anhänger mit max. 100 bar oder 150 bar bremsen zu können. Dabei ist hier nicht der in der zweiten Steuerdruckleitung wirkende Steuerdruck ausschlaggebend, sondern der in der Bremsleitung für den Anhänger wirkende Druck, wie oben beschrieben.

Das Anhängerbremsventil kann als proportionales Schieberventil ausgebildet sein, welches hydraulisch über die erste Steuerdruckleitung seitens der Bremsleitung des Anhängers sowie hydraulisch über die zweite Steuerdruckleitung seitens der Bremsanlage des Zugfahrzeugs ansteuerbar ist. Das Anhängerbremsventil ist dabei so ausgebildet, dass mit größer werdendem Steuerdruck in der zweiten Steuerdruckleitung sich der Schieber proportional verschiebt bzw. zunehmend öffnet, so dass sich ein höherer Bremsdruck durch die von der Hydraulikquelle geförderte Hydraulikflüssigkeit einstellt. Dabei stellt sich bei maximalem Bremsdruck für den Anhänger ein Gleichgewicht ein, da der Druck seitens der Bremsleitung in der ersten Steuerdruckleitung dem Druck in der zweiten Steuerdruckleitung entgegenwirkt. Ist die zweite Steuerdruckleitung hingegen nicht druckbeaufschlagt, d.h. die Bremsanlage des Zugfahrzeugs wird nicht betätigt, so dass sich kein Steuerdruck weiter aufbaut, wird das Schieberventil in die entgegen gesetzte Richtung bewegt und der Druck baut sich über das Schieberventil ab, indem die zuvor geförderte Hydraulikflüssigkeit in Richtung des Hydrauliktanks abfließen kann.

Eine dritte Steuerdruckleitung kann vorgesehen sein, mit welcher das Anhängerbremsventil zusätzlich zur ersten und zweiten Steuerdruckleitung hydraulisch ansteuerbar ist. Die dritte Steuerdruckleitung ist dabei vorzugsweise mit einem elektronisch verstellbaren Druckreduzierventil versehen, welches die Hydraulikquelle und den Hydrauliktank mit der dritten Steuerdruckleitung verbindet. Die zusätzliche Ansteuerung des Anhängerbremsventils kann zu einer Kennfeldänderung des Anhängerbremsventils genutzt werden, so dass durch Aufbringen eines zusätzlichen Steuerdrucks das Bremsverhalten des Anhängers flexibel gestaltet werden kann. Die Anordnung der dritten Steuerdruckleitung erfolgt dabei vorzugsweise parallel zur zweiten Steuerdruckleitung. Das Wesentliche bei diesem Ausführungsbeispiel ist weiterhin zunächst die Begrenzung des maximalen Anhängerbremsdruckes durch den maximalen Steuerdruck in der zweiten Steuerdruckleitung auf einen Wert von 100 bar bzw. 120 bar, wie zuvor erläutert. Der Begrenzungsdruck kann dabei fest eingestellt und nicht elektronisch verstellbar sein, bis auf den Unterschied von 100 bar und 120 bar. Das Bremsverhalten bzw. das Verhalten des Schieberventils ist dadurch derart ausgelegt, dass das Fahrzeug samt Anhänger in seinem ungünstigsten Zustand bezüglich der französischen Vorschrift abgebremst werden kann. Diese Grundeinstellung des Steuersignals durch den Steuerdruck in der zweiten Steuerdruckleitung auf den Anhängerbremsventilschieber wird nun von dem Steuerdruck der dritten Steuerdruckleitung überlagert, welcher durch das zwischen der dritten Steuerdruckleitung und der Hydraulikquelle bzw. Hydrauliktank angeordnete elektroproportionale Druckreduzierventil eingestellt wird. Durch den zusätzlichen dritten Steuerdruck kann das Schieberventil in einem größeren Maße ausgelenkt werden und damit eine größere Bremswirkung erzielt werden. Es findet somit eine Überlagerung der beiden Drücke statt und es ist möglich, das Kennfeld des Anhängerbremsventils frei innerhalb vorgegebener Grenzen zu verändern und so das Bremsverhalten des gesamten Zuges positiv bezüglich des Fahrverhaltens einzustellen.

In weiteren Ausführungsbeispielen ist ein Drucksensor vorgesehen, mit welchem der Druck der Bremsanlage des Zugfahrzeugs ermittelbar ist. Der mittels des Drucksensors gemessene Druck in der Bremsanlage des Zugfahrzeugs kann dann zur weiteren Verarbeitung und Optimierung der hydraulischen Anordnung herangezogen werden.

Es kann ein Drucksensor vorgesehen sein, der in der Bremsleitung des Anhängers angeordnet ist, wobei dies für die Funktion der hydraulischen Anordnung nicht zwingend erforderlich ist, jedoch eine genauere Einstellungen bzw. Regelung des Anhängerbremsdrucks erzielt werden kann. Der Vorteil käme einem geschlossenen Regelkreis gleich, bei dem der Ausgangsdruck der hydraulischen Anordnung bzw. der Anhängerbremsdruck laufend überwacht und dadurch eine vorgesehene Regelung verbessert wird.

Eine elektronische Steuereinheit zur Steuerung bzw. Regelung elektronisch verstellbarer oder schaltbarer Ventile sowie zur Verarbeitung elektronischer Sensorsignale bewertet hierbei den durch den Drucksensor bzw. die Drucksensoren gemessenen Druck im Bremssystem des Zugfahrzeugs und berechnet anhand der von der Bedienperson vorgegebenen Kennlinie für das Anhängerbremsventil den vom Druckreduzierventil in der dritten Steuerdruckleitung zu erzeugenden Steuerdruck, welcher dann den Anhängerbremsventilschieber weiter auslenkt, als dies nur durch den in der zweiten Steuerdruckleitung durch das Bremssignal der Bremsanlage des Zugfahrzeugs erzeugten Steuerdruck möglich wäre. Es findet somit eine Überlagerung der Steuerdrücke in der zweiten und dritten Steuerdruckleitung statt. Es ist somit möglich, das Kennfeld des Anhängerbremsventils frei innerhalb vorgegebener Grenzen zu verändern und so das Bremsverhalten des gesamten Zuges positiv bezüglich des Fahrverhaltens einzustellen. So ist es auch denkbar, dass eine bestimmte Intelligenz in der elektronischen Steuerung hinterlegt wird, die beispielsweise anhand der Druckanstiegsgeschwindigkeit im Zugfahrzeug erkennt, ob es sich um eine Notbremsung handelt, um dann den Anhänger wesentlich schneller und stärker als normal abzubremsen. Als Versorgungsdruck des elektrischen Druckreduzierventils in der dritten Steuerdruckleitung kann der von der Hydraulikquelle erzeugte Druck je nach Bedarf gedrosselt oder ungedrosselt angewandt werden. Dieses ist aus bautechnischen Gründen vorteilhaft, da dieser Druck als Versorgungsdruck für das Bremssystem des Anhängers benötigt wird und somit eine kompaktere Bauweise ermöglicht wird.

Eine erfindungsgemäße hydraulische Anordnung eignet sich besonders für eine Kombination aus Anhänger und Zugfahrzeug im landwirtschaftlichen Betrieb, wobei eine hydraulische Bremsanlage für den Anhänger und eine hydraulische Bremsanlage für das Zugfahrzeug vorgesehen ist. Es sind jedoch auch andere Einsatzgebiete denkbar, in denen eine Kombination aus Zugfahrzeug und Anhänger mit hydraulische Bremsanlagen zum Einsatz kommen und eine erfindungsgemäße hydraulische Anordnung Anwendung finden kann, beispielsweise im Bereich von Nutzfahrzeugen oder sogar im Bereich von Personenkraftwagen.

Die Vorteile der Erfindung liegen insbesondere darin, dass es für eine Bedienperson möglich ist den Ladezustand seines Anhängers durch eine einfache Verstellung für die Abbremsung seiner gesamten Fahrzeugkombination zu berücksichtigen. Ferner kann er von der Kabine aus seinen maximalen Anhängerbremsdruck verstellen und so während der Fahrt das Abbremsverhalten seiner gesamten Fahrzeugkombination optimieren. Des Weiteren kann er von der Kabine aus das Kennfeld seines Anhängerbremsventils der jeweiligen Reifengröße und dem Gesamtgewicht seines Zugfahrzeugs anpassen. Wenn kein Anhänger betrieben wird, kann im normalen Betrieb Energie gespart werden, da die Kennlinie auf ihren minimalen Maximaldruck eingestellt werden kann. Sollte es zu einem Ausfall der Elektrik kommen, kann der Zug immer noch kontrolliert abgebremst werden.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: eine Kombination aus Zugfahrzeug und Anhänger mit einer erfindungsgemäßen hydraulischen Anordnung,
- Fig. 2: einen schematischen Hydraulikschaltplan einer erfindungsgemäßen hydraulischen Anordnung mit manueller Verstellung eines Druckreduzierventils,
- Fig. 3: einen schematischen Hydraulikschaltplan einer erfindungsgemäßen hydraulischen Anordnung mit manueller Verstellung eines Druckreduzierventils und Bypassleitung,
- Fig. 4: einen schematischen Hydraulikschaltplan einer erfindungsgemäßen hydraulischen Anordnung mit elektronischer Verstellung eines Druckreduzierventils und Bypassleitung,
- Fig. 5: einen schematischen Hydraulikschaltplan einer erfindungsgemäßen hydraulischen Anordnung mit elektronischer Verstellung eines Schaltventils und Bypassleitung,
- Fig. 6: einen schematischen Hydraulikschaltplan einer erfindungsgemäßen hydraulischen Anordnung mit elektronischer Verstellung eines Schaltventils ohne Bypassleitung,
- Fig. 7: einen schematischen Hydraulikschaltplan einer erfindungsgemäßen hydraulischen Anordnung mit manueller Verstellung eines Druckreduzierventils ohne Bypassleitung und mit zusätzlicher Steuerdruckleitung und Drucksensor,
- Fig. 8: einen schematischen Hydraulikschaltplan einer erfindungsgemäßen hydraulischen Anordnung mit manueller Verstellung eines Druckreduzierventils mit Bypassleitung und mit zusätzlicher Steuerdruckleitung und Drucksensor,
- Fig. 9: einen schematischen Hydraulikschaltplan einer erfindungsgemäßen hydraulischen Anordnung mit manueller Verstellung eines Schaltventils ohne Bypassleitung und mit zusätzlicher Steuerdruckleitung und Drucksensor,
- Fig. 10: einen schematischen Hydraulikschaltplan einer erfindungsgemäßen hydraulischen Anordnung mit manueller Verstellung eines Schaltventils mit Bypassleitung und mit zusätzlicher Steuerdruckleitung und Drucksensor und
- Fig. 11: ein Diagramm eines Kennlinienfeldes für ein Anhängerbremsventil mit variabler Kennlinie.

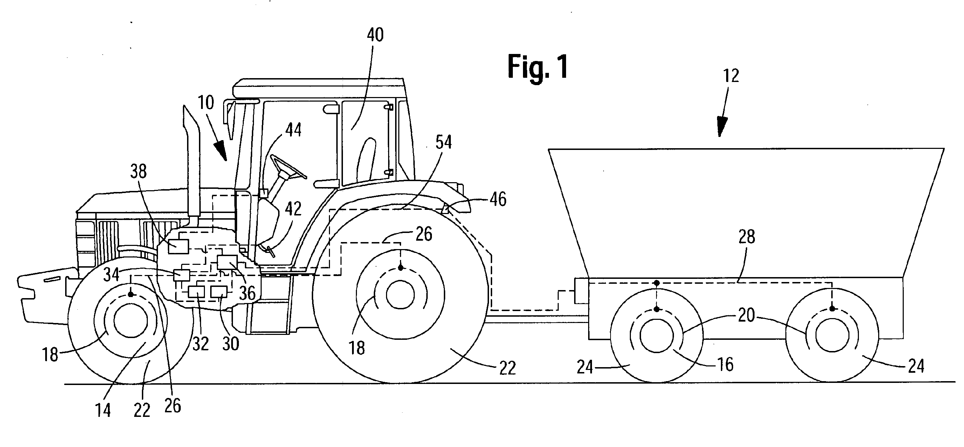

Figur 1 zeigt eine Kombination aus einem Zugfahrzeug 10, in Form eines landwirtschaftlichen Schleppers, und einem Anhänger 12. Das Zugfahrzeug 10 und der Anhänger 12 verfügen jeweils über eine hydraulisch betätigbare Bremsanlage 14, 16, wobei die Versorgungs- und Steuerungskomponenten für die Bremsanlagen 14, 16 vorwiegend am Zugfahrzeug 10 angeordnet sind.

Die Bremsanlagen 14, 16 verfügen über hydraulisch betätigbare Bremsmittel 18, 20, welche als mit Rädern 22 des Zugfahrzeugs 10 und mit Rädern 24 des Anhängers 12 in Eingriff bringbare Bremsbacken ausgebildet sind. Die Betätigung der Bremsmittel 18, 20 erfolgt durch hydraulische Druckbeaufschlagung entsprechender Bremsleitungen 26, 28.

Die Versorgungs- und Steuerungskomponenten für die Bremsanlagen 14, 16 umfassen einen Hydrauliktank 30, eine Hydraulikpumpe 32, eine Hydrauliksteuerung 34 für die Bremsanlage 14 des Zugfahrzeugs 10, eine Hydrauliksteuerung 36 für den Anhänger 12 sowie eine elektronische Steuerung 38 für elektronisch ansteuerbare Komponenten der Hydrauliksteuerungen 36 für das Zugfahrzeug 10 oder den Anhänger 12. In einer Fahrzeugkabine 40 des Zugfahrzeugs 10 sind ein den Bremsdruck auslösendes Bremspedal 42, welches mit der Hydrauliksteuerung 34 der Bremsanlage 14 verbunden ist, sowie eine elektronische Einstelleinrichtung 44, mit der Steuersignale an die elektronische Steuerung 38 generierbar sind, angeordnet. Über eine am Zugfahrzeug 10 angeordnete hydraulische Koppelstelle 46 wird die Bremsanlage 16 des Anhängers 12 mit der Bremsanlage 14 des Zugfahrzeugs 10 hydraulisch verbunden.

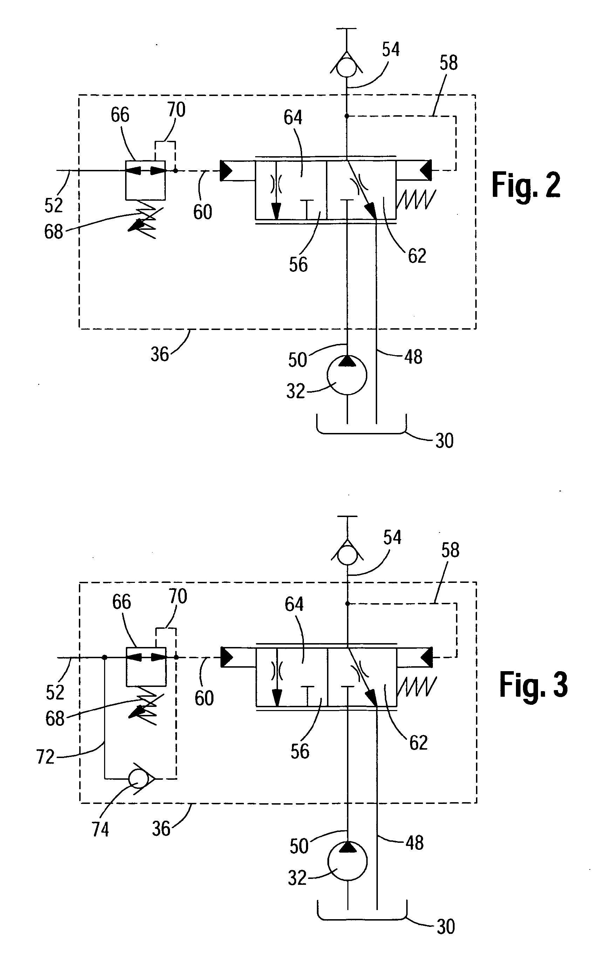

Die Anordnung und Ausbildung der Hydrauliksteuerung 36 für den Anhänger 12 wird anhand der in den Figuren 2 bis 10 dargestellten Ausführungsbeispiele erläutert.

Figur 2 zeigt ein erstes Ausführungsbeispiel der Hydrauliksteuerung 36 für den Anhänger 12. Die Hydrauliksteuerung 36 verfügt über Anschlussleitungen 48, 50, die die Hydrauliksteuerung 36 mit dem Hydrauliktank 30 und der Hydraulikpumpe 32 verbinden. Ferner ist eine hydraulische Leitung 52 vorgesehen, die eine Verbindung zur Hydrauliksteuerung 34 für das Zugfahrzeug 10, bzw. zur Bremsanlage 14 des Zugfahrzeugs 10 darstellt. Eine Bremsleitung 54 verbindet die Hydrauliksteuerung 36 mit der hydraulischen Koppelstelle 46 des Zugfahrzeugs 10. Die Hydrauliksteuerung 36 umfasst weiterhin ein Anhängerbremsventil 56 welches zwischen den Anschlussleitungen 48, 50 und der Bremsleitung 54 angeordnet ist. Das Anhängerbremsventil 56 ist vorzugsweise als hydraulisch ansteuerbares proportionales Schieberventil ausgebildet, welches über eine mit der Bremsleitung 54 verbundenen ersten Steuerdruckleitung 58 und über eine mit der hydraulischen Leitung 52 verbundenen zweiten Steuerdruckleitung 60 hydraulisch ansteuerbar ist. Die Stellung des Anhängerbremsventils 56 und damit auch der Druck in der Bremsleitung 54 richtet sich folglich nach der am Anhängerbremsventil 56 anliegenden Druckdifferenz zwischen der ersten und zweiten Steuerdruckleitung 58, 60. Das Anhängerbremsventil 56 verbindet in einer ersten Extremstellung 62 den Hydrauliktank 30 und in einer zweiten Extremstellung 64 die Hydraulikpumpe 32 mit der Bremsleitung 54. Da das Anhängerbremsventil 56 als proportional ansteuerbares Schieberventil ausgebildet ist, sind proportional zu den auf das Anhängebremsventil 56 wirkenden Steuerdrücken beliebige Zwischenstellungen möglich. Die zweite Steuerdruckleitung 60 ist mit einem Druck reduzierenden Mittel in Form eines Druckreduzierventils 66 versehen, wobei die hydraulische Leitung 52 als Steuerdruckquelle für die zweite Steuerdruckleitung 60 dient. Hierbei kann auch eine andere Komponente der Bremsanlage 14 des Zugfahrzeugs 10 als Steuerdruckquelle dienen, solange diese mit dem beaufschlagten Bremsdruck der Bremsanlage 14 mittelbar oder unmittelbar in Verbindung steht. Das Druckreduzierventil 66 dient zur Reduzierung bzw. Begrenzung des Steuerdrucks, mit dem die zweite Steuerdruckleitung 60 beaufschlagt wird. Das Druckreduzierventil 66 ist über eine als manuell verstellbare Vorspannfeder 68 ausgebildete Einstelleinrichtung verstellbar und wird dadurch mechanisch in eine voreinstellbare geöffnete Grundstellung gezwungen. Ein entgegen der Vorspannkraft der Vorspannfeder 68 wirkender Steuerdruck wird über eine mit der zweiten Steuerdruckleitung 60 verbundenen dritten Steuerdruckleitung 70 aufgebracht und bewegt das Druckreduzierventil 66 entsprechend der Höhe des Steuerdrucks entgegen der Vorspannkraft in Richtung Schließstellung. Bei Erreichen eines maximalen Steuerdrucks in der zweiten Steuerdruckleitung 60 wird dann das Druckreduzierventil 66 über die dritte Steuerdruckleitung 70 entgegen der eingestellten Vorspannkraft geschlossen. Durch entsprechende Voreinstellung der Vorspannkraft wird somit ein maximaler Steuerdruck in der zweiten Steuerdruckleitung 60 und damit ein maximaler Druck für die Bremsleitung 54 des Anhängers 12 eingestellt. Die Einstellung des maximalen Bremsdrucks für den Anhänger 12 erfolgt wie erwähnt durch Verstellung der Vorspannfeder 68 des Druckreduzierventils. Hierdurch kann der Pilotdruck, der das Anhängerbremsventil 56 verschiebt, auf einen bestimmten Maximaldruck eingestellt werden, der beispielsweise 100 bar oder 120 bar (in Frankreich) nicht unterschreitet und 150 bar nicht überschreitet.

Figur 3 zeigt ein weiteres Ausführungsbeispiel, bei dem zusätzlich zu dem in Figur 2 dargestellten Ausführungsbeispiel eine Bypassleitung 72 angeordnet ist, mit der das Druckreduzierventil umgangen wird und die sich zwischen der hydraulischen Leitung 52 und der zweiten Steuerdruckleitung 60 erstreckt. Die Bypassleitung 72 weist ein Rückschlagventil 74 auf, welches in Richtung der zweiten Steuerdruckleitung 60 schließt. Das Rückschlagventil 74 erleichtert ein Rückströmen der Hydraulikflüssigkeit bei nachlassendem Bremsdruck, bzw. Steuerdruck in der zweiten Steuerdruckleitung 60. Je nach Ausführung des Druckreduzierventils 66 wird dadurch auch erst ein Rückströmen der Hydraulikflüssigkeit ermöglicht.

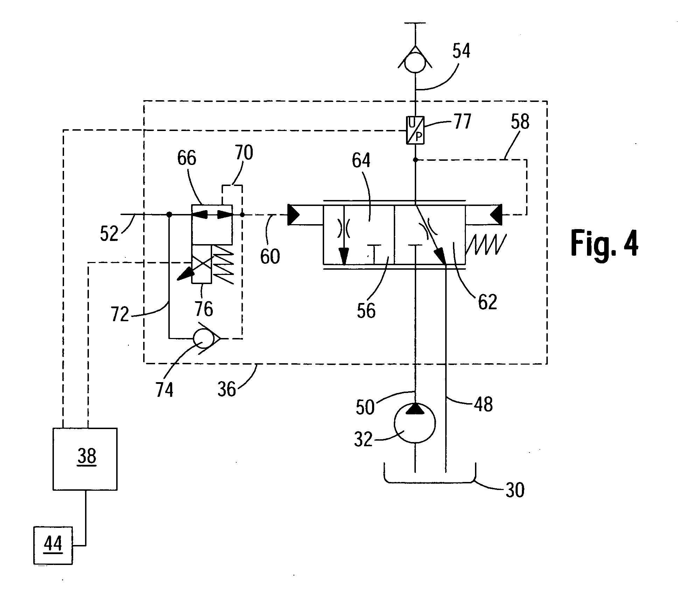

Ein weiteres Ausführungsbeispiel ist in Figur 4 dargestellt. Eine mit der Vorspannfeder 68 in Wechselwirkung tretende elektronische Verstelleinrichtung ermöglicht die elektronische Verstellung des Druckreduzierventils 66 bzw. der Vorspannfeder 68. Durch die Verstelleinrichtung kann die Vorspannfeder elektronisch gesteuert proportional verstärkt oder entlastet werden. Die Verstelleinrichtung ist vorzugsweise als elektronisch ansteuerbare Magnetspule 76 ausgebildet, die über die elektronische Steuerung 38 verstellbar ist. Die Verstellung der Magnetspule 76 bzw. der Verstelleinrichtung erfolgt über die in der Fahrzeugkabine 40 angeordnete Einstelleinrichtung 44, über die entsprechende Steuersignale an die elektronische Steuerung 38 gegeben werden. Die Verstelleinrichtung kann auch als Elektromotor oder als eine andere elektronische Verstelleinrichtung ausgebildet sein, mit der die auf das Druckreduzierventil wirkende Vorspannkraft verstellbar ist. Die Vorspannfeder 68 muss so eingestellt bzw. ausgebildet sein, dass bei Ausfall der Elektronik die Vorschriften nach wie vor erfüllt werden. Somit darf der max. Anhängerbremsdruck beispielsweise 100 bar (120 bar in Frankreich) nicht unter- und 150 bar nicht überschreiten. Wenn die Vorspannfeder 68 beispielsweise auf 100 bar (120 bar in FR) voreingestellt ist, kann die Vorspannfeder 68 entsprechend dem durch die Einstelleinrichtung 44 vorgegebenen elektronischen Signals elektronisch um bis zu 50 bar proportional verstärkt werden, um einen Maximaldruck für das Anhängerbremsventil 56 von 150 bar einzustellen, wobei mit zunehmenden elektronischen Signal die auf das Druckreduzierventil 56 wirkende Vorspannkraft von Vorspannfeder 68 und Magnetspule 76 zunimmt. Wenn die Vorspannfeder 68 hingegen auf 150 bar voreingestellt ist, kann die Vorspannfeder 68 entsprechend dem durch die Einstelleinrichtung 44 vorgegebenen elektronischen Signals elektronisch um bis zu 50 bar proportional entlastet werden, um einen Maximaldruck für das Anhängerbremsventil 56 von 150 bar einzustellen, wobei mit zunehmenden elektronischen Signal die auf das Druckreduzierventil 56 wirkende Vorspannkraft von Vorspannfeder 68 und Magnetspule 76 abnimmt (hier so nicht in der Schaltlogik in Figur 4 dargestellt). Bei einem Ausfall der Elektrik würde der Anhänger immer noch abgebremst werden können, wobei der Maximaldruck entweder 100 bar (120 bar in Frankreich) oder 150 bar betragen würde. Es kann ein Drucksensor 77 vorgesehen sein, der in der Bremsleitung 54 des Anhängers 12 angeordnet ist, wobei dies für die Funktion der hydraulischen Anordnung generell nicht zwingend erforderlich ist, jedoch eine genauere Einstellung bzw. Regelung des Anhängerbremsdrucks über die elektronische Steuereinheit 38 erzielt werden kann. Der Vorteil käme einem geschlossenen Regelkreis gleich, bei dem der Ausgangsdruck der hydraulischen Anordnung bzw. der Anhängerbremsdruck laufend überwacht und dadurch eine vorgesehene Regelung verbessert wird.

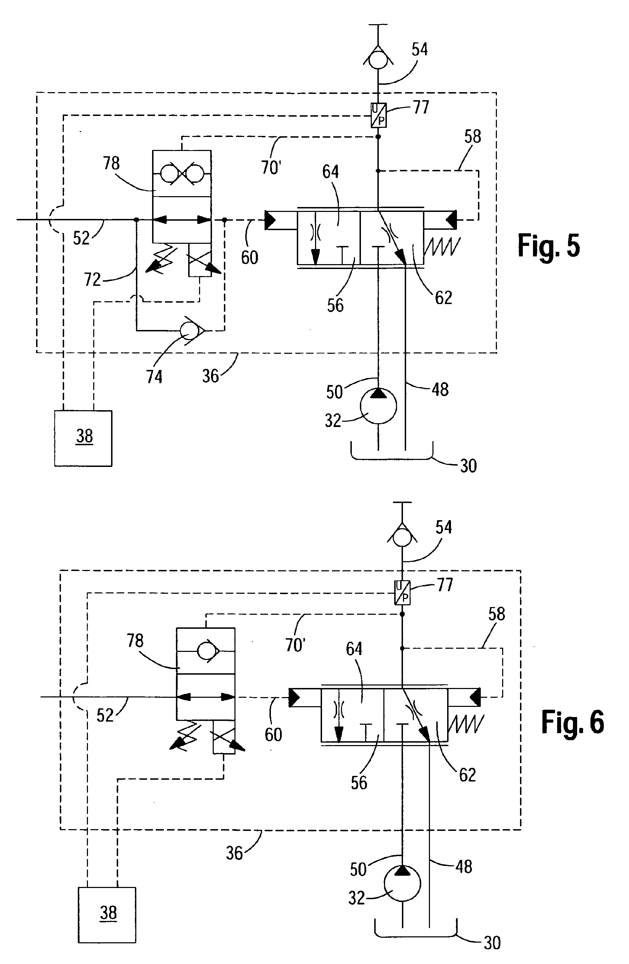

Die Figuren 5 und 6 zeigen jeweils ein weiteres Ausführungsbeispiel, wobei an Stelle des Druckreduzierventils 66 aus den Figuren 2 bis 4 ein Schaltventil 78 angeordnet ist. Das Schaltventil 78 weist eine Schließstellung und eine Durchlassstellung auf, wobei die Durchlassstellung auch hier durch die Vorspannfeder 68 voreingestellt ist. Analog zu dem Ausführungsbeispiel aus Figur 4 kann die Vorspannkraft auch hier durch eine elektronische Verstelleinrichtung in Form einer Magnetspule 76 elektronisch verstellt werden. Gemäß den Figuren 5 und 6 kann diese Ausführung mit und ohne Bypassleitung 72 erfolgen, wobei das Schaltventil 78 bei dem in Figur 6 dargestellten Ausführungsbeispiel (ohne Bypassleitung 72) in der Schließstellung ein Rücklauf der hydraulischen Steuerdruckflüssigkeit in Richtung der Bremsanlage 14 des Zugfahrzeugs 10 zulässt, was in dem in Figur 5 dargestellten Ausführungsbeispiel durch ein separates, in der Bypassleitung 72 angeordnetes, Rückschlagventil 74 gewährleistet wird. Das Schaltventil 78 in den Figuren 5 und 6 ist anders als in den Ausführungsbeispielen zu den Figuren 2 bis 4 über eine dritte Steuerdruckleitung 70' mit der Bremsleitung 54 für den Anhänger 12 verbunden. Somit wird erzielt, dass ab einem bestimmten Druck in der Bremsleitung bzw. ab einem Maximaldruck das Schaltventil 78 automatisch druckgesteuert in die Schließstellung gebracht wird. Der Maximaldruck wird dabei, wie auch in den Ausführungsbeispielen zuvor, von der voreinstellbaren Vorspannkraft vorgegeben. Es ist somit nicht, wie in den Ausführungsbeispielen zuvor (Figuren 2 bis 4), der auf das Anhängerbremsventil 56 wirkende Steuerdruck das Steuersignal für das Druck reduzierende Mittel, sondern der den Anhänger 12 bremsende, in der Bremsleitung 54 wirkende Bremsdruck. Die Elektronik kann, wie bereits erwähnt, auch hier verstärkend oder reduzierend auf die Vorspannkraft für das Schaltventil wirken, so dass bei Ausfall der Elektronik der Anhänger mit beispielsweise max. 100 bar (bzw. 120 bar in Frankreich) oder 150 bar bremsbar ist. Optional kann auch hier, wie bereits zu dem in Figur 4 beschriebenen Ausführungsbeispiel ein Drucksensor 77 vorgesehen sein, der in der Bremsleitung 54 des Anhängers 12 angeordnet ist.

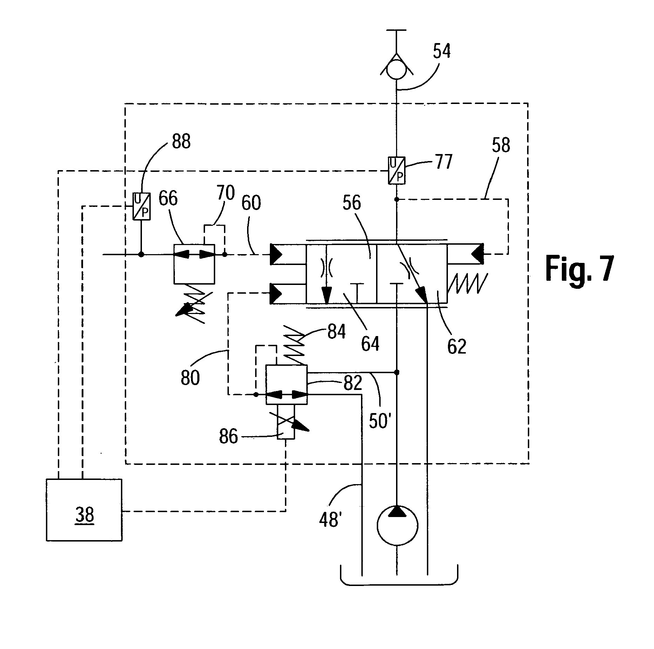

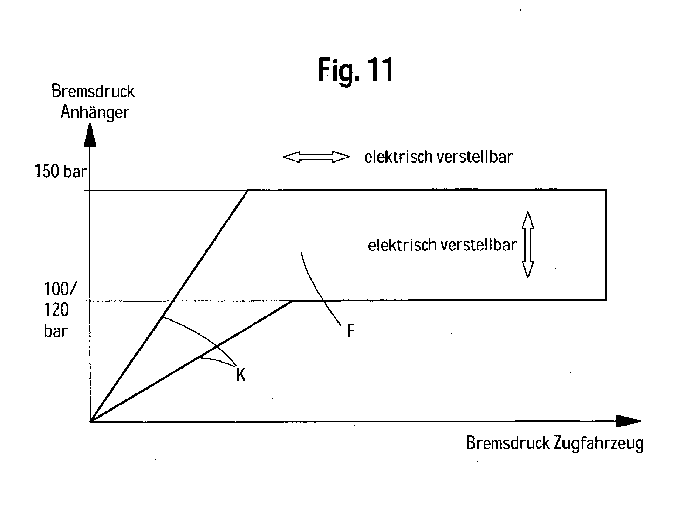

Weitere Ausführungsbeispiele sind in den Figuren 7 bis 10 dargestellt, die sich im Wesentlichen darin von den Ausführungsbeispielen bezüglich der Figuren 2 bis 6 unterscheiden, dass das Anhängerbremsventil 56 über eine weitere Steuerdruckleitung 80 parallel zu der zweiten Steuerdruckleitung 70 zusätzlich ansteuerbar ist, um eine Kennlinie K des Anhängerbremsventils 56 flexibel verstellen zu können, d. h. das Ansprechverhalten des Anhängerbremsventils 56 zu verstärken oder abzuschwächen (siehe Figur 11). Ein verstärktes Ansprechverhalten eines Anhängerbremsventils 56 bedeutet im vorliegenden Fall, dass im Vergleich zu den vorangegangenen Ausführungsbeispielen bei gleichem Bremsdruck in der Bremsanlage 14 des Zugfahrzeugs 10 ein höherer Bremsdruck in der Bremsleitung 54 für den Anhänger 12 erzielt wird. Bildlich gesehen bedeutet dies eine Zunahme der Steigung der Kennlinie K des Anhängerbremsventils 56 (siehe Figur 11, steilere Kennlinie K). Das Anhängerbremsventil 56 wird somit durch einen ersten Steuerdruck, der auf einer ersten Seite des Anhängerbremsventils 56 durch die erste Steuerdruckleitung 58, und durch einen zweiten und dritten (parallel wirkenden) Steuerdruck, der jeweils auf der gegenüberliegenden zweiten Seite des Anhängerbremsventils 56 durch die zweite und weitere Steuerdruckleitung 60, 80 beaufschlagt wird, gesteuert.

Wie in den Figuren 7 bis 10 dargestellt, ist ein elektronisch ansteuerbares, elektroproportionales Druckreduzierventil 82 angeordnet, welches die weitere Steuerdruckleitung 80 sowohl mit dem Hydrauliktank 30 über eine Leitung 48' als auch mit der Hydraulikpumpe 32 über eine Leitung 50' verbindet. Über die weitere Steuerdruckleitung 80 in Verbindung mit dem elektroproportionalen Druckreduzierventil 82 kann somit der insgesamt aufgebrachte Steuerdruck auf der zweiten Seite des Anhängerbremsventils 56 erhöht werden, um das Ansprechverhalten des Anhängerbremsventils 56 zu verstärken bzw. um die Steigung der Kennlinie K des Anhängerbremsventils 56 variabel (flexibel) zu gestalten um so ein verschiedene Kennlinien K umfassendes Kennfeld F für das Anhängerbremsventil 56 abzubilden (siehe Figur 11). Das elektroproportionale Druckreduzierventil 82 verfügt über eine Vorspannfeder 84 sowie über eine elektronische Verstelleinrichtung 86, beispielsweise eine elektromagnetische Spule, die der Vorspannfeder 84 entgegenwirkt. Die Vorspannfeder 84 hält das Druckreduzierventil 82 in einer Grundstellung, in der kein Steuerdruck seitens der Hydraulikpumpe 32 in der weiteren Steuerdruckleitung 80 aufgebaut wird. Durch von der elektronischen Steuerung 38 generierte Steuersignale kann das elektroproportionale Druckreduzierventil 82 proportional zu den Steuersignalen verstellt werden, so dass ein zusätzlicher Steuerdruck für das Anhängerbremsventil 56 aufgebaut werden kann.

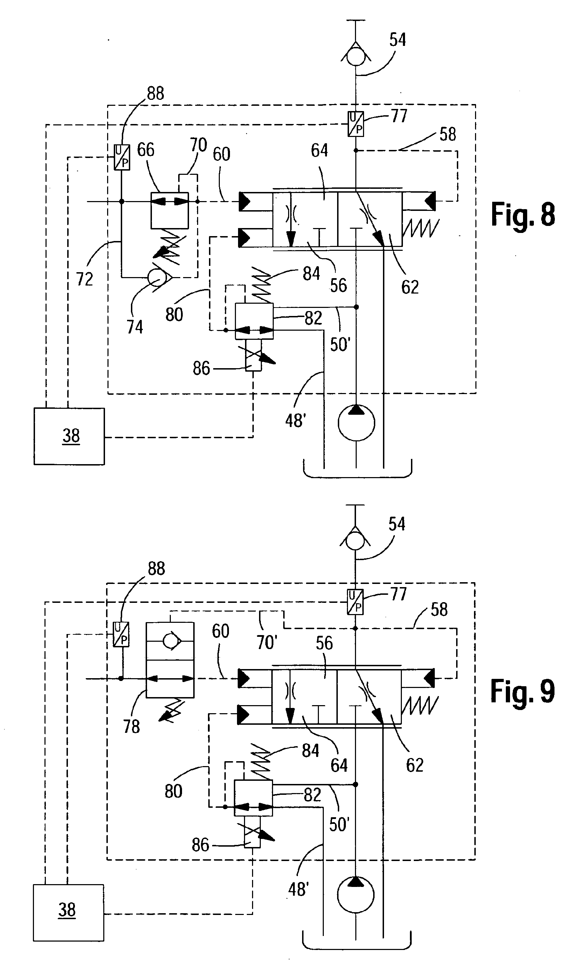

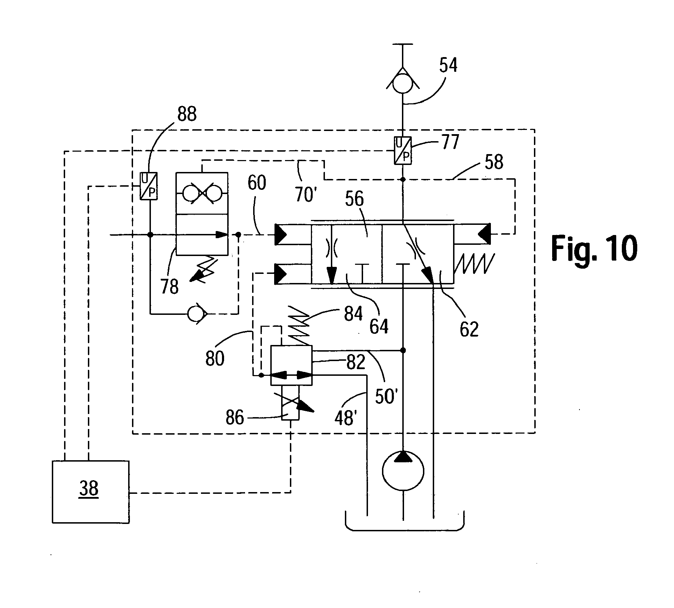

Die in den Figuren 7 und 8 sowie 9 und 10 dargestellten hydraulischen Schaltpläne zeigen zwei verschiedene Versionen, wie ein Anhängerbremsventil 56 entsprechend den obigen Ausführungen flexibel betrieben werden kann, wobei die in den Figuren 7 und 8 dargestellten Ausführungsbeispiele ein in der zweiten Steuerdruckleitung 60 angeordnetes einstellbares Druckreduzierventil 66 aufweisen, welches über eine dritte Steuerdruckleitung 70 mit der zweiten Steuerdruckleitung 60 verbunden ist und die in den Figuren 9 und 10 dargestellten Ausführungsbeispiele ein in der zweiten Steuerdruckleitung 60 angeordnetes einstellbares Schaltventil 78 aufweisen, welches über eine dritte Steuerdruckleitung 70' mit der Bremsleitung 54 für den Anhänger 12 verbunden ist. Durch das einstellbare Druckreduzierventil 66 bzw. durch das einstellbare Schaltventil 78 kann der Steuerdruck in der zweiten Steuerdruckleitung 60 gemäß den Ausführungen zu den Figuren 2 bis 6 begrenzt werden. Die Figuren 7 und 8 unterscheiden sich dadurch, dass das Druckreduzierventil 66, analog zu den in den Figuren 2 und 3 dargestellten Ausführungsbeispielen, einmal ohne und einmal mit Bypassleitung 72 mit Rückschlagventil 74 ausgeführt ist(Figur 7 bzw. Figur 8). Die Figuren 9 und 10 unterscheiden sich dadurch, dass das Schaltventil 78, analog zu den in den Figuren 5 und 6 dargestellten Ausführungsbeispielen, einmal ohne und einmal mit Bypassleitung 72 mit Rückschlagventil 74 ausgeführt ist (Figur 9 bzw. Figur 10). Entsprechend wird auch hier über eine Rücklaufmöglichkeit der hydraulischen Steuerdruckflüssigkeit in der Schließstellung des Schaltventils 72 (Figur 9) oder über ein separat in der Bypassleitung 72 angeordnetes Rückschlagventil 74 (Figur 10) ein Druckabbau in der Steuerdruckleitung gewährleistet.

Neben dem bereits erwähnten, zur flexiblen Ansteuerung des Anhängerbremsventils 56 angeordneten, elektroproportionalen Druckreduzierventil 82, ist in den Ausführungsbeispielen zu den Figuren 7 bis 10 ein mit der als Steuerdruckquelle dienenden hydraulischen Leitung 52 verbundener Drucksensor 88 angeordnet, mit dem ein Druck in der Bremsanlage 14 des Zugfahrzeugs 10 erfasst werden kann. Sowohl der Drucksensor 88 als auch das elektroproportionale Druckreduzierventil 82 bzw. die Verstelleinrichtung 86 sind mit der elektronischen Steuerung 38 verbunden. Entsprechende Steuersignale für das elektroproportionale Druckreduzierventil 82 können durch die Einstelleinrichtung 44 in Verbindung mit der elektronischen Steuerung 38 vorgegeben bzw. generiert werden. Es kann auch in den Ausführungsbeispielen gemäß den Figuren 7 bis 10, wie bereits zu dem in Figur 4 beschriebenen Ausführungsbeispiel, ein Drucksensor 77 vorgesehen sein, der in der Bremsleitung 54 des Anhängers 12 angeordnet ist.

Ein für alle in den Figuren 7 bis 10 dargestellten Ausführungsbeispielen wesentliches Merkmal ist, dass zunächst die Begrenzung des maximalen Bremsdrucks für den Anhänger 12 durch Begrenzung des Steuerdrucks in der zweiten Steuerdruckleitung 60 über das einstellbare Druckreduzierventil 66 bzw. über das einstellbare Schaltventil 78 analog zu den in den Figuren 2 bis 6 dargestellten Ausführungsbeispielen erfolgt.

Ausgehend von einem fest eingestellten Steuerdruck in der zweiten Steuerdruckleitung 60 zur Einstellung des vorgeschriebenen maximalen Bremsdrucks für den Anhänger 12 (beispielsweise 100 bar oder 120 bar für Frankreich) kann bei Ausfall der Elektrik eine vorschriftsmäßige Abbremsung des Anhängers 12 erfolgen. Wichtig ist, dass dieser maximale Bremsdruck fest eingestellt ist und nicht verstellbar sein sollte (bis auf den Unterschied 100 bar und 120 bar, was aus Gründen der Teilevielfalt sinnvoll sein kann, so dass ein und dasselbe Druckreduzierventil 66 beispielsweise den Vorgaben für 100 bar und für 120 bar genügt. Die Bremscharakteristik bzw. die Kennlinie K des Anhängerbremsventils 56 ist in einer Grundeinstellung so ausgelegt bzw. eingestellt, dass in der Grundstellung des elektroproportionalen Druckreduzierventils 82 die Fahrzeugkombination (10, 12) in ihrem ungünstigsten Zustand bezüglich der französischen Vorschrift abgebremst werden kann, ohne die Vorschrift zu verletzen (z. B. untere Kennlinie K in Figur 11). Es ist natürlich auch eine andere (größere oder kleinere) Steigung der Kennlinie K des Anhängerbremsventils 56 denkbar, doch sollte das Fahrzeug nicht zu aggressiv abgebremst werden, da diese Betriebsart nur bei Ausfall der el. Versorgung benötigt wird.

Die Kennlinie K, die eine kleinere Steigung und einen minimalen Maximaldruck wiedergibt (untere Kennlinie in Figur 11) spiegelt das Bremsverhalten des Anhängerbremsventils 56 bei Ausfall der Elektronik wieder. Diese Grundeinstellung des Steuerdrucks für das Anhängerbremsventil 56 wird nun von einem weiteren Steuerdruck überlagert, welcher von dem elektroproportionalen Druckreduzierventil 82 bzw. der damit verbundenen hydraulischen Versorgungsleitung zur Hydraulikpumpe 32 erzeugt wird. Die elektronische Steuerung 38 bewertet hierzu den mit dem dargestellten Drucksensor 88 gemessenen Druck in der Bremsanlage 14 des Zugfahrzeugs 10 und berechnet anhand der von der Bedienperson über die Einstelleinrichtung 44 vorgegebene Kennlinie K das vom elektroproportionalen Druckreduzierventil 82 zu erzeugende Drucksignal, woraufhin eine durch die elektronische Steuerung 38 generierte Ansteuerung der Verstelleinrichtung 86 erfolgt. Dies führt, ausgehend von der Grundstellung des elektroproportionalen Druckreduzierventils 82, zu einer weiteren Auslenkung des Anhängerbremsventils 56 als dies nur durch das Bremssignal des Zugfahrzeugs 10 möglich wäre und damit zu einer steileren Kennlinie K des Anhängerbremsventils 56. Ausgehend von einer steileren Kennlinie K kann in umgekehrter Weise auch eine Rückführung zu einer flacheren Kennlinie K erfolgen. Bei Ausfall der Elektronik wird automatisch die Grundstellung des elektroproportionalen Druckreduzierventils 82 sowie die Grundeinstellung der Kennlinie eingerichtet.

Es ist somit möglich, das Kennfeld F frei innerhalb vorgegebener Grenzen (obere untere Kennlinien K) zu verändern und so das Bremsverhalten der gesamten Fahrzeugkombination (Zugfahrzeug 10 und Anhänger 12) positiv bezüglich des Fahrverhaltens einzustellen. So ist es auch denkbar, dass eine bestimmte Intelligenz in der elektronischen Steuerung hinterlegt wird, die beispielsweise anhand der Druckanstiegsgeschwindigkeit im Zugfahrzeug 10 erkennt, ob es sich um eine Notbremsung handelt, um dann den Anhänger 12 wesentlich schneller und stärker als normal abzubremsen.

Auch wenn die Erfindung lediglich anhand eines Ausführungsbeispiels beschrieben wurde, erschließen sich für den Fachmann im Lichte der vorstehenden Beschreibung sowie der Zeichnung viele verschiedenartige Alternativen, Modifikationen und Varianten, die unter die vorliegende Erfindung fallen.

## Patentansprüche

1. Hydraulische Anordnung zum Bremsen eines Anhängers (12), mit einer mit einer Bremsanlage (16) eines Anhängers (12) hydraulisch verbindbaren Bremsleitung (54), einer Hydraulikquelle (32), einem Hydrauliktank (30), einem die Hydraulikquelle (32) und den Hydrauliktank (30) mit der Bremsleitung (54) verbindenden, hydraulisch ansteuerbaren Anhängerbremsventil (56), einer sich zwischen der Bremsleitung (54) und dem Anhängerbremsventil (56) erstreckenden ersten Steuerdruckleitung (58), einer sich zwischen dem Anhängerbremsventil (56) und einer Steuerdruckquelle erstreckenden zweiten Steuerdruckleitung (60) und einem in der zweiten Steuerdruckleitung (60) angeordneten, einstellbaren, Druck reduzierenden Mittel zur Steuerung des Steuerdrucks in der zweiten Steuerdruckleitung (60), **dadurch gekennzeichnet, dass** die Steuerdruckquelle als Teil einer Hydrauliksteuerung (34) einer Bremsanlage (14) eines den Anhänger (12) ziehenden Zugfahrzeugs (10) ausgebildet ist und das Druck reduzierende Mittel durch eine einstellbare Vorspannkraft mechanisch in eine geöffnete Grundstellung zwingbar ist.

2. Hydraulische Anordnung nach Anspruch 1, **dadurch gekennzeichnet, dass** die Steuerdruckquelle als eine mit der Bremsanlage (14) des Zugfahrzeugs (10) verbundene hydraulische Leitung (52) ausgebildet ist.

3. Hydraulische Anordnung nach Anspruch 1 oder 2, **dadurch gekennzeichnet, dass** ein in einer Bypassleitung (72) dem Druck reduzierenden Mittel parallel geschaltetes Rückschlagventil (74) angeordnet ist, welches in Richtung des Anhängerbremsventils (56) schließt.

4. Hydraulische Anordnung nach einem der Ansprüche 1 bis 3, **dadurch gekennzeichnet, dass** das Druck reduzierende Mittel in der zweiten Steuerdruckleitung (60) als hydraulisch ansteuerbares Druckreduzierventil (66) ausgebildet ist, welches ab einen bestimmten Steuerdruck in der zweiten Steuerdruckleitung (60) die zweite Steuerdruckleitung (60) schließt.

5. Hydraulische Anordnung nach einem der Ansprüche 1 bis 3, **dadurch gekennzeichnet, dass** das Druck reduzierende Mittel als Schaltventil (78) ausgebildet ist, welches ab einen bestimmten Druck in der Bremsleitung (54) die zweite Steuerdruckleitung (60) in Richtung zum Anhängerbremsventil (56) schließt.

6. Hydraulische Anordnung nach einem der Ansprüche 1 bis 5, **dadurch gekennzeichnet, dass** das Druck reduzierende Mittel eine verstellbare Vorspannfeder (68) aufweist, mit welcher eine Vorspannkraft erzeugbar ist, die das Druck reduzierende Mittel in die geöffnete Grundstellung zwingt.

7. Hydraulische Anordnung nach Anspruch 6, **dadurch gekennzeichnet, dass** das Druck reduzierende Mittel elektronische Verstellmittel (76) aufweist, durch die eine Stellkraft erzeugbar ist, die der Vorspannkraft der Vorspannfeder (68) entgegenwirkt oder diese verstärkt.

8. Hydraulische Anordnung nach einem der Ansprüche 1 bis 7, **dadurch gekennzeichnet, dass** das Anhängerbremsventil (56) als proportionales Schieberventil ausgebildet ist.

9. Hydraulische Anordnung nach einem der Ansprüche 1 bis 8, **dadurch gekennzeichnet, dass** eine weitere Steuerdruckleitung (80) vorgesehen ist, mit welcher das Anhängerbremsventil (56) zusätzlich zur ersten und zweiten Steuerdruckleitung (58, 60) hydraulisch ansteuerbar ist, wobei ein elektronisch verstellbares Druckreduzierventil (82) vorgesehen ist, welches die Hydraulikquelle (32) und den Hydrauliktank (30) mit der weiteren Steuerdruckleitung (80) verbindet.

10. Hydraulische Anordnung nach einem der Ansprüche 1 bis 9, **dadurch gekennzeichnet, dass** ein Drucksensor (88) vorgesehen ist, mit welchem der Druck der Bremsanlage (14) des Zugfahrzeugs (10) ermittelbar ist.

11. Hydraulische Anordnung nach einem der Ansprüche 1 bis 10, **dadurch gekennzeichnet, dass** ein Drucksensor (77) vorgesehen ist, mit welchem der Druck der Bremsleitung (54) des Anhängers (12) ermittelbar ist.

12. Hydraulische Anordnung nach einem der Ansprüche 1 bis 11, **dadurch gekennzeichnet, dass** eine elektronische Steuereinheit (38) zur Steuerung der elektronisch verstellbaren oder schaltbaren Ventile (66, 78, 82) vorgesehen ist.

13. Hydraulische Anordnung nach Anspruch 12, **dadurch gekennzeichnet, dass** die elektronische Steuereinheit (38) zur Verwertung eines von einem Drucksensor (77, 88) gelieferten Druckwertes in einem Steuerungsvorgang geeignet ist.

14. Kombination aus Anhänger (12) und Zugfahrzeug (10), mit einer hydraulischen Bremsanlage (14) für den Anhänger (12) und einer hydraulischen Bremsanlage (16) für das Zugfahrzeug (10), **dadurch gekennzeichnet, dass** eine hydraulische Anordnung nach einem der Ansprüche 1 bis 13 vorgesehen ist.

## Claims

1. Hydraulic arrangement for braking a trailer (12), with a brake line (54) connectable hydraulically to a brake system (16) of a trailer (12), with a hydraulic source (32), with a hydraulic tank (30), with a hydraulically activatable trailer brake valve (56) connecting the hydraulic source (32) and the hydraulic tank (30) to the brake line (54), with a first control-pressure line (58) extending between the brake line (54) and the trailer brake valve (56), with a second control-pressure line (60) extending between the trailer brake valve (56) and a control-pressure source, and with an adjustable pressure-reducing means, arranged in the second control-pressure line (60), for controlling the control pressure in the second control-pressure line (60), **characterized in that** the control-pressure source is designed as part of a hydraulic control (34) of a brake system (14) of a traction vehicle (10) drawing the trailer (12), and the pressure-reducing means can be forced mechanically into an open basic position by means of an adjustable prestressing force.

2. Hydraulic arrangement according to Claim 1, **characterized in that** the control-pressure source is designed as a hydraulic line (52) connected to the brake system (14) of the traction vehicle (10).

3. Hydraulic arrangement according to Claim 1 or 2, **characterized in that** a non-return valve (74) which is connected in parallel to the pressure-reducing means and which closes in the direction of the trailer brake valve (56) is arranged in a bypass line (72).

4. Hydraulic arrangement according to one of Claims 1 to 3, **characterized in that** the pressure-reducing means in the second control-pressure line (60) is designed as a hydraulically activatable pressure-reducing valve (66) which closes the second control-pressure line (60) beyond a defined control pressure in the second control-pressure line (60).

5. Hydraulic arrangement according to one of Claims 1 to 3, **characterized in that** the pressure-reducing means is designed as a switching valve (78) which closes the second control-pressure line (60) in the direction of the trailer brake valve (56) beyond a defined pressure in the brake line (54).

6. Hydraulic arrangement according to one of Claims 1 to 5, **characterized in that** the pressure-reducing means has an adjustable prestressing spring (68), by means of which a prestressing force can be generated which forces the pressure-reducing means into the open basic position.

7. Hydraulic arrangement according to Claim 6, **characterized in that** the pressure-reducing means has an electronic adjustment means (76) by which an actuating force can be generated which counteracts or reinforces the prestressing force of the prestressing spring (68).

8. Hydraulic arrangement according to one of Claims 1 to 7, **characterized in that** the trailer brake valve (56) is designed as a proportional slide valve.

9. Hydraulic arrangement according to one of Claims 1 to 8, **characterized in that** a further control-pressure line (80) is provided, by means of which the trailer brake valve (56) can be activated hydraulically in addition to the first and the second control-pressure line (58, 60), an electronically adjustable pressure-reducing valve (82) being provided, which connects the hydraulic source (32) and the hydraulic tank (30) to the further control-pressure line (80).

10. Hydraulic arrangement according to one of Claims 1 to 9, **characterized in that** a pressure sensor (88) is provided, by means of which the pressure of the brake system (14) of the traction vehicle (10) can be determined.

11. Hydraulic arrangement according to one of Claims 1 to 10, **characterized in that** a pressure sensor (77) is provided, by means of which the pressure of the brake line (54) of the trailer (12) can be determined.

12. Hydraulic arrangement according to one of Claims 1 to 11, **characterized in that** an electronic control unit (38) for controlling the electronically adjustable or switchable valves (66, 78, 82) is provided.

13. Hydraulic arrangement according to Claim 12, **characterized in that** the electronic control unit (38) is suitable for utilizing in a control operation a pressure value delivered by a pressure sensor (77, 88).

14. Combination of a trailer (12) and traction vehicle (10), with a hydraulic brake system (14) for the trailer (12) and with a hydraulic brake system (16) for the traction vehicle (10), **characterized in that** a hydraulic arrangement according to one of Claims 1 to 13 is provided.

## Revendications

1. Agencement hydraulique pour freiner une remorque (12), comprenant une conduite de frein (54) pouvant être connectée hydrauliquement à une installation de frein (16) d'une remorque (12), une source hydraulique (32), un réservoir hydraulique (30), une soupape de frein de remorque (56) à commande hydraulique reliant la source hydraulique (32) et le réservoir hydraulique (30) à la conduite de frein (54), une première conduite de pression de commande (58) s'étendant entre la conduite de frein (54) et la soupape de frein de remorque (56), une deuxième conduite de pression de commande (60) s'étendant la soupape de frein de remorque (56) et une source de pression de commande, et un moyen réducteur de pression ajustable, disposé dans la deuxième conduite de pression de commande (60) pour la commande de la pression de commande dans la deuxième conduite de pression de commande (60), **caractérisé en ce que** la source de pression de commande est réalisée sous forme d'une partie d'une commande hydraulique (34) d'une installation de frein (14) d'un véhicule tracteur (10) tirant la remorque (12), et le moyen réducteur de pression peut être forcé mécaniquement dans une position de base ouverte par une force de précontrainte ajustable.

2. Agencement hydraulique selon la revendication 1, **caractérisé en ce que** la source de pression de commande est réalisée sous forme d'une conduite hydraulique (52) connectée à l'installation de frein (14) du véhicule tracteur (10).

3. Agencement hydraulique selon la revendication 1 ou 2, **caractérisé en ce qu'**une soupape de non retour (74) montée en parallèle avec le moyen réducteur de pression est disposée dans une conduite de dérivation (72) et se ferme dans la direction de la soupape de frein de remorque (56).

4. Agencement hydraulique selon l'une quelconque des revendications 1 à 3, **caractérisé en ce que** le moyen réducteur de pression est réalisé dans la deuxième conduite de pression de commande (60) sous forme de soupape réductrice de pression (66) à commande hydraulique, qui ferme la deuxième conduite de pression de commande (60) à partir d'une pression de commande déterminée dans la deuxième conduite de pression de commande (60).

5. Agencement hydraulique selon l'une quelconque des revendications 1 à 3, **caractérisé en ce que** le moyen réducteur de pression est réalisé sous forme de soupape de commutation (78) qui ferme la deuxième conduite de pression de commande (60) dans la direction de la soupape de frein de remorque (56) à partir d'une pression déterminée dans la conduite de frein (54).

6. Agencement hydraulique selon l'une quelconque des revendications 1 à 5, **caractérisé en ce que** le moyen réducteur de pression présente un ressort de précontrainte réglable (68), avec lequel on peut produire une force de précontrainte qui force le moyen réducteur de pression dans la position de base ouverte.

7. Agencement hydraulique selon la revendication 6, **caractérisé en ce que** le moyen réducteur de pression présente des moyens de réglage électroniques (76), qui permettent de produire une force de réglage qui agit à l'encontre de la force de précontrainte du ressort de précontrainte (68) ou qui l'augmente.

8. Agencement hydraulique selon l'une quelconque des revendications 1 à 7, **caractérisé en ce que** la soupape de frein de remorque (56) est réalisée sous forme de soupape à tiroir proportionnelle.

9. Agencement hydraulique selon l'une quelconque des revendications 1 à 8, **caractérisé en ce que** l'on prévoit une autre conduite de pression de commande (80) avec laquelle la soupape de frein de remorque (56) peut être commandée hydrauliquement en plus de la première et de la deuxième conduite de pression de commande (58, 60), une soupape de réduction de pression (82) à commande électronique étant prévue, laquelle relie la source hydraulique (32) et le réservoir hydraulique (30) à l'autre conduite de pression de commande (80).

10. Agencement hydraulique selon l'une quelconque des revendications 1 à 9, **caractérisé en ce qu'**un capteur de pression (88) est prévu, lequel permet de détecter la pression de l'installation de frein (14) du véhicule tracteur (10).

11. Agencement hydraulique selon l'une quelconque des revendications 1 à 10, **caractérisé en ce qu'**un capteur de pression (77) est prévu, lequel permet de détecter la pression de la conduite de frein (54) de la remorque (12).

12. Agencement hydraulique selon l'une quelconque des revendications 1 à 11, **caractérisé en ce qu'**une unité de commande électronique (38) est prévue pour commander les soupapes à commande ou commutation électronique (66, 78, 82).

13. Agencement hydraulique selon la revendication 12, **caractérisé en ce que** l'unité de commande électronique (38) est appropriée pour analyser une valeur de pression fournie par le capteur de pression (77, 88) dans une opération de commande.

14. Combinaison d'une remorque (12) et d'un véhicule tracteur (10), avec une installation de frein hydraulique (14) pour la remorque (12) et une installation de frein hydraulique (16) pour le véhicule tracteur (10), **caractérisée en ce que** l'on prévoit un agencement hydraulique selon l'une quelconque des revendications 1 à 13.
